**Europäisches Patentamt**

**European Patent Office**

**Office européen des brevets**

(19)

(11) Numéro de publication : **0 489 671 A2**

# (12) DEMANDE DE BREVET EUROPEEN

(21) Numéro de dépôt : **91420435.9**

(22) Date de dépôt : **05.12.91**

(51) Int. Cl.⁵ : **F16L 37/28,** F16L 37/08, F16L 37/00

(30) Priorité : **06.12.90 FR 9015528**
**10.06.91 FR 9107274**

(43) Date de publication de la demande :
**10.06.92 Bulletin 92/24**

(84) Etats contractants désignés :
**DE FR IT NL SE**

(71) Demandeur : **S.A. DES ETABLISSEMENTS**
**STAUBLI (France)**
**B.P. 20 183 Rue des Usines**
**F-74210 Faverges (FR)**

(72) Inventeur : **Truchet, Gaston**
**Impasse des Mésanges**
**F-74210 Faverges (FR)**

(74) Mandataire : **Monnier, Guy et al**
**Cabinet Monnier 150 Cours Lafayette B.P.**
**3058**
**F-69393 Lyon Cédex 03 (FR)**

(54) **Dispositif de raccordement pour l'alimentation des appareils domestiques fonctionnant au gaz combustible.**

(57)   Le corps (11) qui renferme les moyens d'obturation (14) et qui est pourvu d'un verrou (21) pour la retenue de l'embout (29) prévu à l'extrémité de la canalisation flexible (C), est mobile axialement dans la bague fixe (10) et est immobilisé à l'aide d'un doigt escamotable (25) coopérant avec une empreinte (10b) de ladite bague. Dans une variante les moyens d'obturation sont constitués par la partie arrière du corps (11), agencée à la manière d'un tiroir de commande.

Fig. 5

La présente invention a trait à l'alimentation des cuisinières, réchauds, chauffe-eau, machines à laver et autres appareils domestiques fonctionnant au gaz combustible, et elle vise plus particulièrement le mode de branchement amovible de la canalisation flexible usuelle de ces appareils sur l'extrémité de la tuyauterie fixée à demeure à la paroi murale du local.

L'invention a pour objet le dispositif de raccordement qui est défini à la revendication 1, lequel dispositif est tel qu'il regroupe l'ensemble des conditions optimales d'utilisation, à savoir :

– offrir un passage maximum en vue d'éviter les pertes de charge compte tenu de la pression d'utilisation généralement réduite ;

– interdire tout débouché à l'air libre de la tuyauterie fixe d'alimentation aussi longtemps que la canalisation flexible n'a pas été branchée ;

– s'opposer à toute déconnection inopinée de la canalisation flexible avant obturation de la canalisation fixe ;

– provoquer de manière automatique l'obturation de la tuyauterie fixe sous l'effet aussi bien d'une sollicitation exercée sur la canalisation flexible que d'une surpression accidentelle de l'alimentation en gaz ;

– et permettre la libre orientation du dispositif quelle que soit l'orientation du débouché de la tuyauterie fixe.

Le dessin annexé, donné à titre d'exemple, permettra de mieux comprendre l'invention, les caractéristiques qu'elle présente et les avantages qu'elle est susceptible de procurer :

Fig. 1 est une coupe axiale d'un dispositif de raccordement établi conformément à une première forme de mise en oeuvre de l'invention, ce dispositif étant représenté préalablement au branchement amovible d'une canalisation flexible alimentant l'appareil d'utilisation.

Fig. 2 est une vue en perspective illustrant la fixation de ce dispositif dans une paroi murale.

Fig. 3 est une vue de détail en perspective montrant le montage articulé de l'obturateur tournant à l'intérieur du corps du dispositif.

Fig. 4 et 5 sont des coupes analogues à celle de fig. 1, mais correspondant à deux phases successives du branchement de la canalisation flexible.

Fig. 6, 7 et 8 sont des coupes de détail à échelle agrandie illustrant la position du doigt escamotable d'arrêt aux trois positions correspondant à fig. 1, 4 et 5.

Fig. 9 est une coupe axiale d'un dispositif établi conformément à une seconde forme de mise en oeuvre de l'invention.

Fig. 10 reproduit fig. 9 après introduction de l'embout de raccordement dans le corps tubulaire.

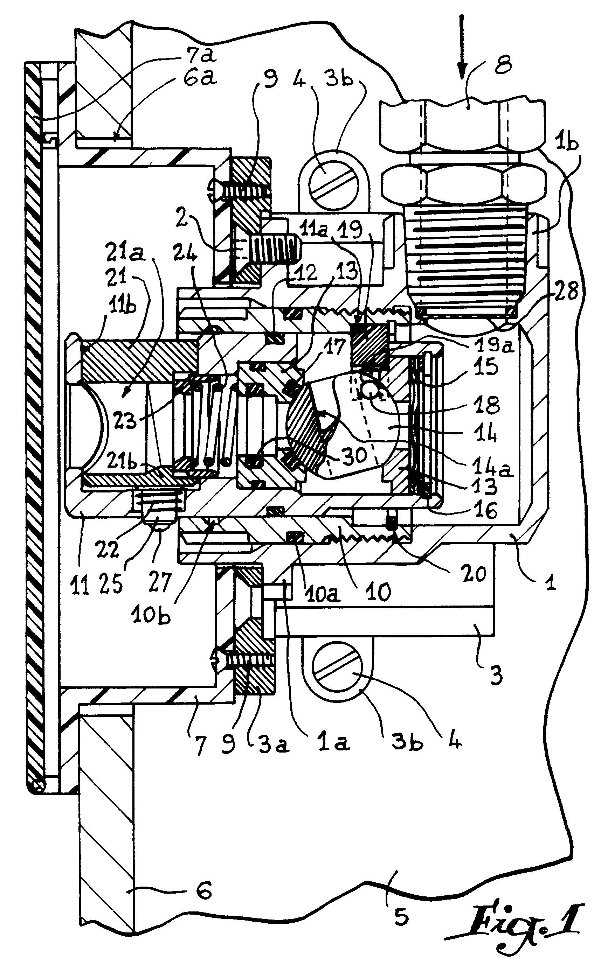

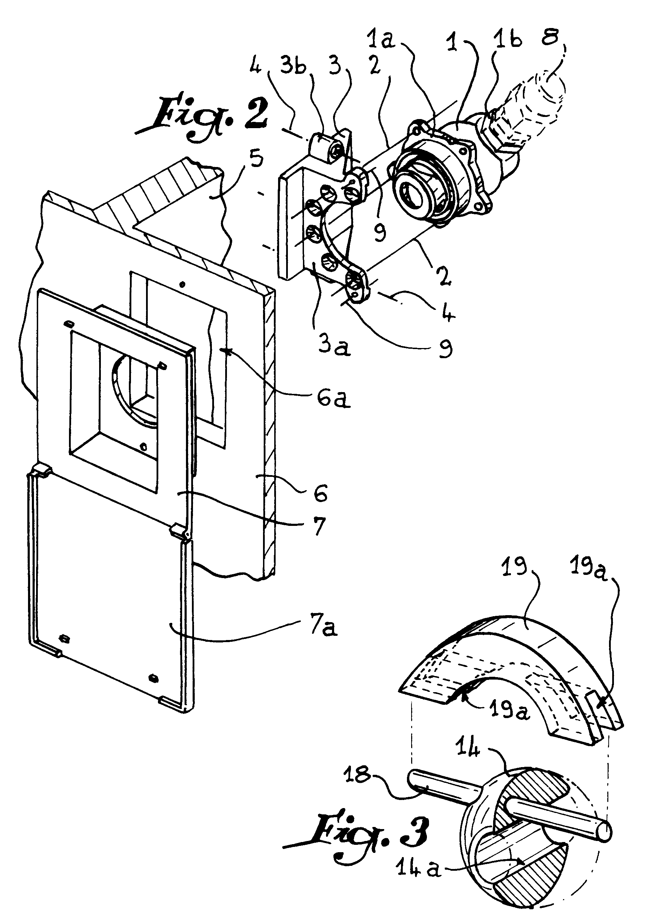

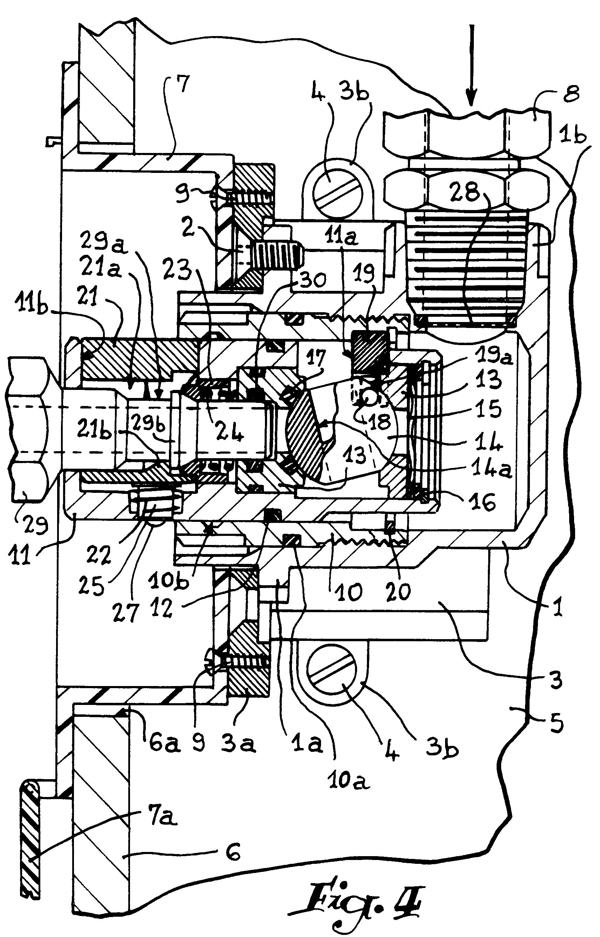

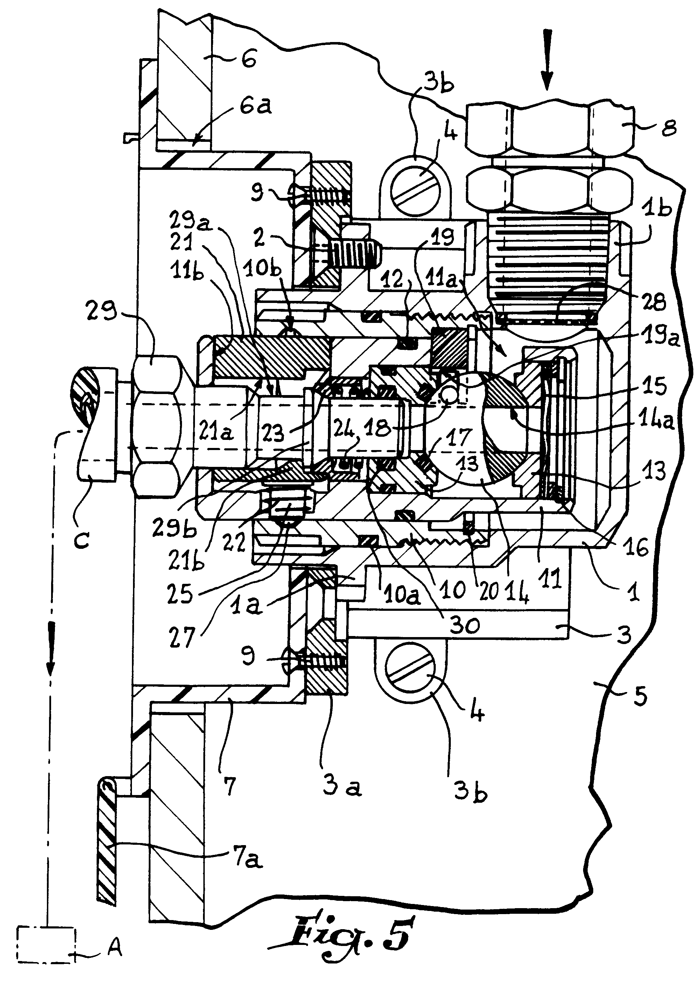

Le dispositif de raccordement représenté en fig. 1 à 8 comprend un boîtier principal 1 à profil en équerre qui est destiné à être rigidement fixé à la paroi murale dans laquelle ledit dispositif est encastré, à la manière des prises usuelles d'alimentation électrique. A cet effet et comme montré en fig. 1 et 2, ce boîtier 1 est pourvu d'une bride annulaire 1a qui est percée d'une série de trous à l'intérieur de trois desquels viennent s'engager trois vis 2 aptes à être introduites sélectivement dans les trous pratiqués dans une bride semi-circulaire 3a solidaire d'une semelle de fixation 3. Cette dernière comporte des bossages 3b perforés pour le passage de deux vis 4 qui assurent la fixation de ladite semelle contre une cloison ou autre élément 5 orienté perpendiculairement à la paroi murale 6 dans laquelle le dispositif est destiné à se trouver encastré.

Au niveau du point de fixation de la semelle 3, cette paroi 6 est découpée d'une ouverture ou fenêtre 6a à l'intérieur de laquelle vient s'engager la partie arrière d'un cadre 7 équipé d'un portillon articulé de fermeture 7a. On comprend que les vis de fixation 2 permettent la libre orientation du boîtier principal 1 par rapport à la paroi murale 6, de sorte que la tubulure d'entrée 1b de ce boîtier peut être mise en coïncidence axiale avec le débouché de la tuyauterie rigide 8 prévue à poste fixe en arrière de la paroi 6 pour l'alimentation en gaz combustible du dispositif de raccordement. La fixation en place du cadre 7 peut être assurée de toute manière appropriée, par exemple à l'aide de vis 9 engagées à travers des perforations pratiquées dans le fond annulaire dudit cadre pour coopérer avec des taraudages prévus dans la bride 3a de la semelle 3.

La partie principale du boîtier 1, orientée perpendiculairement à la tubulure d'entrée 1b, est prévue taraudée pour permettre le vissage d'une bague fixe 10 qui est équipée d'un joint extérieur 10a et qui renferme à coulissement axial le corps proprement dit 11 du dispositif de raccordement, l'étanchéité du coulissement de ce corps étant assurée par un joint 12.

Le corps 11 est prévu tubulaire et dans sa partie arrière (c'est-à-dire celle qui est tournée en direction de la tubulure 1b) sont engagées deux pièces annulaires 13 formant sièges pour un obturateur sphérique tournant 14 serré entre lesdits sièges. Un empilage de rondelles ondulées 15, retenues par un jonc fendu arrière 16, assure le serrage élastique de l'obturateur 14 dont la rotation est rendue étanche à l'aide d'un joint 17 porté par celle des deux pièces 13 qui est tournée vers l'avant du corps 11.

Perpendiculairement à l'axe de son perçage diamétral 14a (fig. 3) et en un point décalé latéralement par rapport audit perçage, l'obturateur 14 est traversé par une goupille ou axe 18 dont les extrémités sont engagées avec jeu dans des fentes 19a ménagées dans les extrémités fourchues d'un étrier 19. Comme montré en fig. 1, ce dernier s'étend transversalement à l'intérieur d'une ouverture latérale 11a du corps 11, et il est porté par la bague fixe 10 en se trouvant maintenu entre un épaulement annulaire de l'ouverture axiale de ladite bague et un jonc fendu 20.

La partie antérieure du corps 11 est découpée d'une ouverture latérale 11b qui forme logement pour un verrou 21 mobile transversalement à l'axe dudit corps, à l'encontre ou sous l'effet d'un ressort 22. Ce verrou 21 est percé d'une ouverture 21a qui, moyennant compression du ressort 22, est susceptible d'être amenée en coïncidence axiale avec l'ouverture du corps 11 ; au niveau du ressort 22, la paroi de cette ouverture 21a comporte une dent en saillie 21b dont le rôle sera exposé plus loin. La course du verrou 21 sous l'effet du ressort 22 est limitée par la partie antérieure, établie à un plus petit diamètre, d'une bague mobile 23 engagée à coulissement axial dans l'ouverture du corps 11, en avant de la pièce ou siège 13 qui porte le joint 17. Un ressort 24 tend à maintenir la bague 23 en contact avec le verrou 21.

Comme illustré en fig. 6, à l'intérieur du ressort 22 associé au verrou 21 est introduit un doigt escamotable 25 que ledit ressort 22 maintient appliqué contre la paroi extérieure du verrou. Ce doigt 25, prévu creux, est percé en bout de manière à laisser saillir, sous l'effet d'un petit ressort interne 26, une bille éclipsable de verrouillage 27. Cette bille 27 est destinée à coopérer, ainsi qu'on va le voir, avec une dépression ou empreinte 10b pratiquée dans l'ouverture axiale de la bague fixe 10, en avant du joint d'étanchéité 12 sus-mentionné.

Fig. 1 montre le dispositif de raccordement en attente de branchement. Le gaz combustible sous pression qui arrive par la tuyauterie rigide 8 traverse un filtre 28 et pénètre à l'intérieur du boîtier 1, mais il ne peut s'échapper à l'extérieur du fait que l'obturateur 14 est à une position angulaire telle que son perçage 14a est orienté transversalement à l'axe du corps 11. Les joints 10a, 12 et 17 s'opposent à toute fuite.

Il convient d'observer qu'à cette position d'attente, le corps 11 est immobilisé axialement dans les deux sens. Effectivement, l'étrier 19 s'oppose à tout coulissement d'arrière en avant, tandis que le doigt 25 interdit le coulissement en sens inverse par portée contre le bord avant de la bague fixe 10, comme montré en fig. 6 ; ce doigt 25 ne peut être escamoté moyennant une poussée manuelle, du fait que la bague 23, introduite dans le débouché arrière de l'ouverture 21a du verrou 21, immobilise axialement ce dernier.

Pour opérer le branchement de l'appareil à gaz A envisagé, il y a lieu d'abaisser le portillon 7a (fig. 4) et d'engager dans l'ouverture axiale du corps 11 et dans l'ouverture 21a du verrou 21 la partie antérieure d'un embout mâle 29 fixé à l'extrémité libre de la canalisation flexible d'alimentation C de l'appareil A. Cet embout 29, évidemment prévu tubulaire, est agencé à la manière traditionnelle et comporte une dépression annulaire 29a, prévue immédiatement en arrière d'une collerette 29b dont la face antérieure présente un profil tronconique.

Comme illustré en fig. 4, la partie antérieure de cet embout 29 traverse la bague 23 et pénètre dans l'ouverture de la pièce 13 qui porte le joint 17. La collerette 29b repousse axialement la bague 23 qui libère en conséquence le verrou 21, de sorte que ce dernier se déplace transversalement sous l'effet du ressort 22 et que sa dent 21b vient s'engager dans la dépression 29a.

On remarquera que le corps 11 est resté immobile axialement et que l'obturateur 14 s'oppose toujours au passage du gaz à travers ledit corps. Par contre et comme illustré en fig. 7, le déplacement transversal du verrou 21 a libéré le doigt 25, en ce sens que l'utilisateur peut, moyennant une pression manuelle, escamoter ce doigt en même temps qu'il poursuit son effort axial sur l'embout 29.

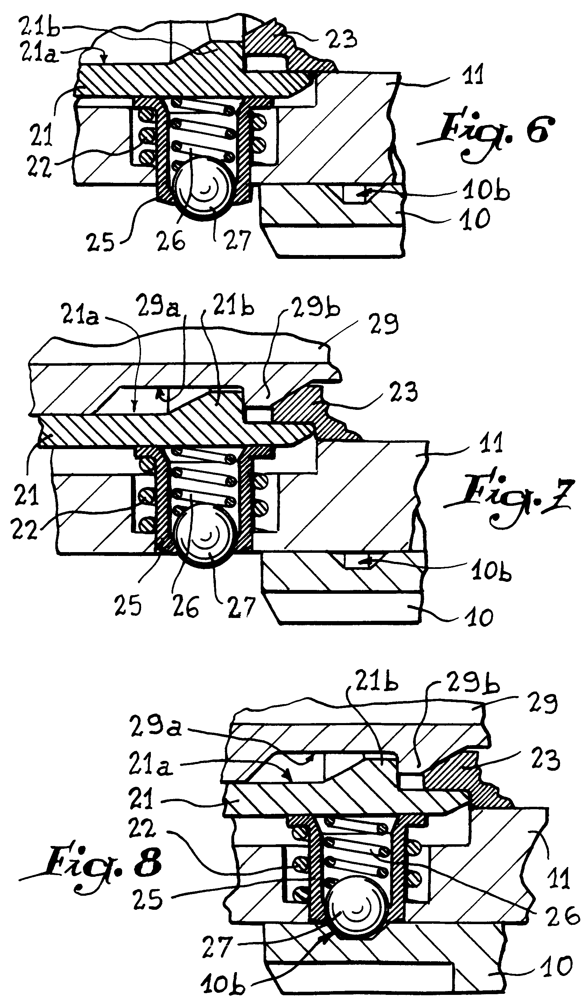

Dès ce moment, c'est le corps 21 qui se déplace axialement vers l'intérieur, et ce jusqu'à ce que la bille 27, sollicitée par le ressort 26, vienne s'encliqueter dans l'empreinte 10b de la bague fixe 10 (voir fig. 5 et 8). La goupille ou axe 18 restant retenue par l'étrier 19 solidaire de la bague fixe 10, le coulissement du corps 11 provoque, moyennant déplacement transversal de cet axe dans les fentes 19a, la rotation de l'obturateur 14 dont le perçage radial 14a est ainsi amené en coïncidence axiale avec l'ouverture du corps 11.

Le gaz combustible qui emplit le boîtier 1 peut en conséquence traverser le corps 11 et pénétrer dans la canalisation flexible C associée à l'embout 29, toute fuite étant interdite par un joint intérieur 30 prévu à cet effet dans l'ouverture axiale de la pièce 13 qui porte le joint 17.

Il est important de relever que la retenue du corps 11 à la position d'ouverture est relativement précaire et dépend de la force exercée par le ressort 26 et du profil de l'empreinte 10b ; dans ces conditions, des sollicitations appliquées à la canalisation flexible C fixée à l'embout 29, de la même manière qu'une élévation intempestive de la pression du gaz dans la tuyauterie 8, provoquent le rappel automatique du corps 11 en direction de l'avant et, en conséquence, la rotation de l'obturateur 14 qui interdit alors tout passage.

On conçoit que pour dissocier l'embout 29 et le corps 11, il suffit à l'opérateur d'agir sur le verrou 21 à l'encontre du ressort 22, de façon à abaisser la dent 21b et à libérer ainsi la collerette 21c ; le ressort 24 ramène élastiquement la bague 23 vers l'avant au fur et à mesure du retrait axial de l'embout 29, de sorte qu'on revient ainsi à la position d'attente suivant fig. 1.

On observera cependant que l'action sur le verrou 21 ne peut être exercée par l'utilisateur lorsque le dispositif est à la position ouverte suivant fig. 5 puisque le doigt 25 se trouve coincé entre la paroi intérieure de la bague 10 et ledit verrou qui est ainsi immobilisé, comme cela ressort clairement de l'examen de la fig. 8 : le retrait de l'embout 29, moyennant action sur le verrou 21, ne peut intervenir qu'après que l'utilisateur ait ramené, au moyen d'une traction axiale exercée sur l'embout 29, le corps 11 à la position avancée suivant fig. 4, position pour laquelle l'obturateur 14 est à la position fermée.

On obtient de la sorte une sécurité totale.

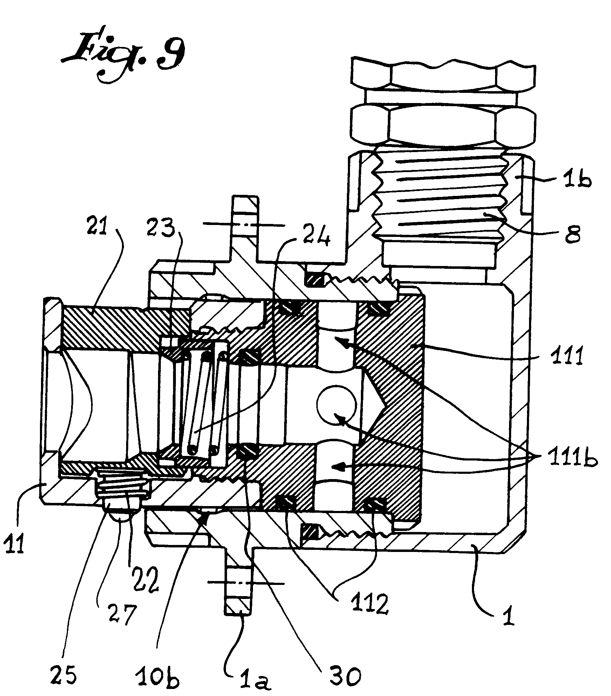

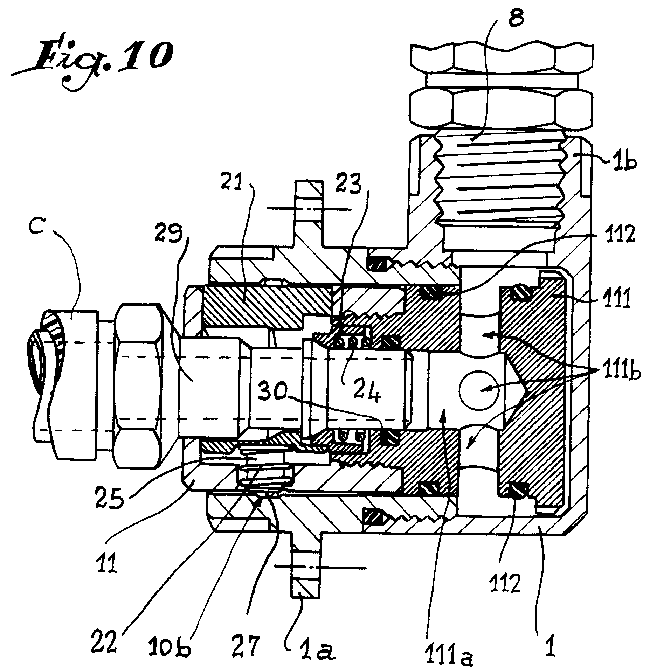

Fig. 9 et 10 illustrent une seconde forme de mise en oeuvre de l'invention qui permet de simplifier la construction du dispositif de raccordement et d'en abaisser le prix de revient, tout en maintenant intégralement les avantages de sécurité définis ci-dessus.

On retrouve évidemment un boîtier principal 1 à profil en équerre, pourvu d'une bride annulaire 1a destinée à permettre son montage dans une semelle de fixation (non représentée) solidaire de la paroi murale dans laquelle est encastrée la tuyauterie fixe 8 d'alimentation en gaz combustible. Dans ce boîtier 1 est monté à coulissement axial le corps tubulaire 11 qui est équipé du verrou transversal 21 et du doigt escamotable 25, le tout étant identique à ce qui a été décrit ci-dessus en référence à fig. 1 à 8, y compris la bille 27 portée par ce doigt et apte à coopérer avec l'empreinte qu'on a référencée 10b, bien que ladite empreinte soit en fait, par suite de la suppression de la bague intermédiaire fixe, directement ménagée dans l'ouverture du boîtier 1.

La partie arrière du corps 11 est taraudée axialement de manière à permettre le vissage d'une pièce arrière 111 qui la prolonge axialement. Cette pièce 111 est percée d'un alésage axial borgne 111a et c'est à l'intérieur du débouché antérieur de celui-ci que sont logés la bague mobile de retenue 23, son ressort de rappel 24 et le joint intérieur 30. A l'opposé de la bague 23, l'espace intérieur de l'alésage 111a communique avec l'extérieur à travers des canaux radiaux 111b qui débouchent sur la périphérie de la pièce 111, entre deux joints 112.

On comprend sans peine que la pièce 111 solidaire du corps coulissant 11 se comporte à la manière d'un tiroir mobile d'obturation et tient lieu de l'obturateur tournant 14 de la forme de réalisation suivant fig. 1 à 8. En effet, il suffit de comparer fig. 9 et 10 pour vérifier :

– que préalablement au branchement de la canalisation flexible C (voir fig. 9), le corps 11 se trouve retenu par le doigt 25 à une position axiale telle que le débouché des canaux radiaux 111b est situé en vis-à-vis de la paroi intérieure du boîtier 1 qui s'oppose ainsi à tout passage de gaz combustible ;

– et que par contre, lorsque l'embout 29 est fixé à l'extrémité de la canalisation C a été introduit à fond (voir fig. 10) dans le corps 11 et dans l'ouverture du verrou 21, ledit corps 11 a reculé jusqu'à une position axiale telle que le débouché des canaux 111b se trouve alors en communication avec l'espace intérieur de la tubulure d'entrée 1b du boîtier 1 et de la tuyauterie fixe 8.

Le fonctionnement et le mode d'utilisation du dispositif de raccordement suivant cette seconde forme de réalisation restent identiques à ce qui a été décrit plus haut, mais la construction est considérablement simplifiée par suite de la suppression de l'obturateur tournant et, dans une mesure non négligeable, de la bague intermédiaire fixe 10 prévue entre le boîtier 1 et le corps tubulaire 11. Bien évidemment, le prix de revient est très sensiblement réduit.

## Revendications

1. Dispositif de raccordement pour l'alimentation des appareils domestiques fonctionnant au gaz combustible, caractérisé en ce qu'il comprend en combinaison :
   – un boîtier (1) pourvu d'une tubulure d'entrée (1b) susceptible d'être reliée à la tuyauterie fixe d'alimentation en gaz combustible (8) ;
   – un corps tubulaire (11) qui est monté à coulissement axial à l'intérieur dudit boîtier (1) et qui est équipé de moyens d'obturation (14-18, 111-112) aptes à assurer, au cours de ses déplacements axiaux en sens opposés, la commande du passage du gaz combustible ;
   – un verrou (21) porté par le corps (11) et mobile transversalement à l'axe de celui-ci sous l'effet ou à l'encontre de moyens élastiques de rappel (22), ledit verrou comportant une ouverture qui est apte à être amenée en coïncidence avec celle du corps (11) ;
   – une bague (23) mobile axialement dans l'ouverture axiale du corps (11) et associée à des moyens élastiques (24) qui tendent à l'engager dans l'ouverture du verrou (21) pour retenir celui-ci à l'encontre des moyens élastiques (22) qui lui sont associés ;
   – un doigt escamotable (25) monté à coulissement transversal dans le corps (11) et associé à des moyens élastiques qui tendent à l'engager dans une empreinte fixe de retenue (10b) ;
   – et un embout mâle (29) fixé à la canalisation flexible d'alimentation (C) de l'appareil, lequel embout présente des moyens (29a-29b) aptes à coopérer avec le verrou (21) lorsqu'il a été engagé dans l'ouverture du corps (11) et dans celle de ce verrou.

2. Dispositif suivant la revendication 1, caractérisé en ce que le doigt (25) renferme un corps à profil sphérique (27) associé à un ressort interne (26) qui tend à l'appliquer dans l'empreinte fixe (10b).

3. Dispositif suivant la revendication 1, caractérisé en ce qu'il comprend une semelle (3) propre à assurer la fixation du boîtier (1) contre la paroi murale (5-6) destinée à supporter le dispositif.

4. Dispositif suivant la revendication 3, caractérisé en ce que la semelle (3) et le boîtier (1) comportent des brides (3a, 1a) à profil substantiellement annulaire, qui sont percées d'une série de trous propres à recevoir des vis d'assemblage (4) permettant d'orienter librement la tubulure d'entrée (1b) du boîtier (1) pour l'amener en alignement avec la tuyauterie fixe d'alimentation (8).

5. Dispositif suivant la revendication 4, caractérisé en ce que la bride (3a) de la semelle (3) est rendue solidaire du fond d'un cadre (7) engagé à travers l'ouverture (6a) pratiquée dans la paroi murale (5-6) pour l'encastrement du dispositif.

6. Dispositif suivant la revendication 1, caractérisé en ce que les moyens d'obturation sont constitués par un obturateur (14) qui est pourvu d'un perçage diamétral (14a) et qui est monté à rotation sur un axe (18) solidaire du boîtier (1) et décalé axialement par rapport à l'axe du corps (11) de façon à ce que le déplacement axial dudit corps provoque la rotation de l'obturateur, lequel est élastiquement maintenu serré entre deux pièces annulaires (13) mobiles axialement dans l'ouverture du corps (11), tandis que l'axe (18) qui supporte l'obturateur (14) est porté par un étrier fixe (19) qui s'étend dans une ouverture latérale (11a) pratiquée dans le corps (11) au niveau de cet obturateur (14).

7. Dispositif suivant la revendication 6, caractérisé en ce que les extrémités de l'étrier fixe (19) sont découpées de fentes (19a) qui permettent le déplacement transversal de l'axe (18) qui porte l'obturateur (14).

8. Dispositif suivant la revendication 1, caractérisé en ce que pour constituer les moyens d'obturation le corps tubulaire (11), en arrière de la bague mobile de retenue (24), est agencé à la manière d'un tiroir et comporte au moins un canal radial (111) qui communique avec l'alésage axiale borgne (111a) dudit corps pour déboucher sur la périphérie de celui-ci entre deux joints d'étanchéité (112), ce débouché se trouvant en communication avec la tuyauterie fixe (8) à l'une des positions axiales de ce corps (11).

*Fig.1*

Fig. 2

Fig. 3

*Fig. 4*

Fig. 5

Fig. 6

Fig. 7

Fig. 8

Fig. 9

Fig.10